# FASCICULE DE BREVET EUROPEEN

(11) **EP 3 546 716 B1**
(45) Date de publication et mention de la délivrance du brevet: **09.12.2020**
(21) Numéro de dépôt: 19165077.9
(22) Date de dépôt: 26.03.2019
(51) Int. Cl.: F01N 9/00, F02D 41/02, F02D 41/14

(54) **PROCÉDÉ ET SYSTÈME DE COMMANDE DE LA RÉGÉNÉRATION D 'UN FILTRE À PARTICULES**
VERFAHREN UND ANLAGE ZUR STEUERUNG DER REGENERATION EINES PARTIKELFILTERS
METHOD AND DEVICE FOR CONTROLLING THE REGENERATION OF A PARTICULATE FILTER

(30) Priorité: 28.03.2018 FR 1852677
(43) Date de publication de la demande: 02.10.2019
(73) Titulaire: RENAULT s.a.s., 92100 Boulogne-Billancourt (FR)
(72) Inventeur: DAMAGNEZ, Frédéric, 91710 VERT-LE-PETIT (FR); HILLAIRE, Mathieu, 91150 ETAMPES (FR); LEFEVRE, Cédric, 91510 LARDY (FR)

(56) Documents cités:
- DE-A1-102004 019 660
- FR-A1- 2 872 205
- JP-A- 2010 203 320
- US-A1- 2011 073 088
- US-A1- 2016 032 799

## Description

La présente invention concerne le domaine des moteurs à combustion interne, notamment des moteurs de type Diesel à injection directe.

Plus particulièrement, la présente invention concerne le domaine de la dépollution des moteurs Diesel, et notamment la régénération des filtres à particules.

Contrairement aux catalyseurs d'oxydation, qui appliquent un traitement continu aux gaz d'échappement, les filtres à particules, d'acronyme « FAP », fonctionnement de manière séquentielle. Pendant le fonctionnement normal du moteur, le filtre à particules piège les particules polluantes, telles que les particules de suies émises dans les gaz de combustion du moteur. Périodiquement lors de phases de régénération du filtre à particules, par exemple quand la masse de suies atteint un seuil, ces particules stockées sont brûlées, par la production d'un exotherme contrôlé dans la ligne d'échappement. Pour être régénéré, le filtre à particules nécessite des modes de combustion spécifiques, requérant des niveaux de thermique et/ou de richesse déterminés pour brûler les particules.

Les opérations de régénération des filtres à particules nécessitent un apport de chaleur et d'oxygène pour générer la combustion des particules de suies.

La vitesse de combustion des particules de suies est principalement déterminée par le niveau de température obtenu en appliquant des stratégies particulières dans le contrôle moteur.

La concentration en oxygène des gaz d'échappement est un paramètre dont le contrôle est nécessaire pour maîtriser la régénération du filtre à particules. S'il n'y a pas assez d'oxygène à l'échappement, la combustion des particules de suies est inefficace, voire inexistante, et s'il y a trop d'oxygène à l'échappement, notamment avec une température des gaz d'échappement élevée et en présence d'une masse importante de particules de suies dans le filtre à particule, la combustion des particules de suies n'est plus maîtrisée et peut aboutir à l'emballement de la régénération. Il faut en effet éviter l'emballement de la régénération, c'est-à-dire une combustion incontrôlée des particules de suies, dont la conséquence est la destruction du filtre à particules, qui peut entrainer un incendie du véhicule. Il est donc nécessaire de contrôler la température et le taux d'oxygène des gaz d'échappement pendant les phases de régénération du filtre à particules.

Afin d'éviter l'emballement de la régénération, il est courant de définir un réglage situé dans une plage admissible, par exemple autour de 8%, afin de contrôler l'injection de carburant et l'ouverture et la fermeture de la vanne d'admission d'air, de sorte à limiter le taux d'oxygène tout au long de la régénération.

Toutefois, une telle précaution est généralement excessive.

On peut se référer à cet égard au document US 8 484 956 - B2 qui décrit un procédé de commande de la régénération d'un filtre à particules capable, à partir de la mesure d'une sonde à oxygène amont et du régime moteur, de déterminer la charge du moteur, la température et le débit des gaz, ainsi que la composition des gaz. Le procédé est ensuite capable de déclencher une régénération et à la mettre en œuvre en contrôlant l'injection de carburant et l'ouverture et la fermeture de la vanne d'admission d'air.

On peut également se référer au document US 2016 032 799 - A1 qui décrit un procédé de régénération d'un filtre à particules dans lequel, si le moteur tourne au ralenti, la concentration en oxygène est limitée à un premier seuil et dans lequel lorsque la masse de suies résiduelle estimée dans le filtre à particules est suffisamment faible, la concentration en oxygène est limitée à un deuxième seuil.

De plus, il n'y a aucune variabilité du taux d'oxygène, hormis sur des zones de fonctionnement à risque du moteur nécessitant des taux d'oxygène bas. Le taux d'oxygène est alors réduit sur toute la durée de la régénération.

Une telle solution ne permet pas d'optimiser l'efficacité des régénérations. Or, les contraintes liées par les normes européennes « EURO 6c » et suivantes, ainsi que la sévérité des roulages impliquent la nécessité d'améliorer les efficacités de la régénération des filtres à particules, afin de limiter les risques de filtres à particules colmatés, ainsi que les alertes de vidange prématurées.

On connait également le document US 8 215 294 - B2 qui divulgue un procédé de régénération d'un filtre à particules, dans lequel, lorsque le moteur tourne au ralenti, on fixe la concentration en oxygène à une valeur cible en fonction de la température du filtre à particules.

Enfin, on connait le document EP 2 444 640 - A1 qui concerne une injection de carburant maîtrisée dans un filtre à particules pendant la phase de régénération afin de maintenir une température élevée tout en évitant l'emballement de la régénération. L'injection de carburant est déterminée en fonction de la température sur des points de fonctionnement critiques du moteur. On maîtrise le taux d'oxygène sur ces points en agissant sur le volet d'admission des gaz.

On connait également le document DE 10 2004 019 660 - A1 qui décrit un dispositif de purification de gaz d'échappement pour moteur à combustion interne, le document US 2011/0073088 - A1 qui décrit un système de filtration et d'oxydation de particules polluantes produites par un moteur à injection directe d'essence ou encore le document FR 2 872 205 - A1 qui décrit un système d'air à la régénération d'un filtre à particules.

Il existe un besoin d'améliorer les procédés et systèmes de régénération des filtres à particules, notamment leur efficacité, dans le but de réduire le temps de régénération.

Le but de la présente invention est donc de permettre une régénération des filtres à particules capable de maitriser le taux d'oxygène en cours de régénération.

Un autre objectif de l'invention est de réduire les cas de filtres à particules colmatés et d'accroître les intervalles de vidange.

L'invention a pour objet un procédé de commande de la régénération d'un filtre à particules dans lequel on fait varier le taux d'oxygène moyen en alternant des phases riches en oxygène et des phases pauvres en oxygène pendant toute la durée d'un cycle de régénération du filtre à particules.

Ainsi, on maitrise le taux d'oxygène en cours de régénération, notamment par pulsations d'oxygène dans le filtre à particules.

Grâce au fractionnement de la concentration en oxygène sur la totalité du cycle de régénération, on obtient une évolution continue, par exemple, une augmentation linéaire, du taux d'oxygène en fonction de la masse de particules de suies.

Ainsi, la vitesse de montée en température du filtre à particules est augmentée en début de régénération, puis la vitesse de combustion des particules de suies est augmentée en fin de régénération.

Le temps de régénération est ainsi réduit.

Le cycle de régénération du filtre à particules comprend trois phases.

Selon le procédé, on compare la masse des particules de suies dans le filtre à particules avec une deuxième valeur de seuil et on déclenche une première phase du cycle de régénération lorsque la masse des particules de suies dans le filtre à particules est supérieure à une deuxième valeur de seuil. Lors du déclenchement de la régénération, on impose une première consigne de température en amont du filtre à particules, par exemple égale à 650°C, afin que la température mesurée en amont du filtre à particules monte progressivement jusqu'à une température minimale suffisante pour amorcer le processus de combustion des particules de suies dans le filtre à particules.

Par exemple, on compare la température réelle mesurée en amont du filtre à particules avec ladite première consigne de température, et tant que la température réelle mesurée en amont du filtre à particules est inférieure à ladite première consigne de température, on impose une première consigne de taux d'oxygène élevée, par exemple égale à 15%, en alternant des phases riches en oxygène et des phases pauvres en oxygène pour obtenir un taux d'oxygène réel égal à la première consigne de taux d'oxygène.

Selon le procédé, lorsque la température mesurée en amont du filtre à particules est supérieure ou égale à la première consigne de température en amont du filtre à particules, on déclenche une deuxième phase de régénération du filtre à particules.

Lors de la deuxième phase de régénération, on compare la masse des particules de suies dans le filtre à particules avec une troisième valeur de seuil. Tant que la masse des particules de suies dans le filtre à particules est supérieure à ladite troisième valeur de seuil et que la température mesurée en amont du filtre à particules est supérieure ou égale à la première consigne de température, on impose une deuxième consigne de température en amont du filtre à particules, par exemple égale à 400°C, et on impose une deuxième consigne de taux d'oxygène réduite, en réduisant l'alternance des phases riches en oxygène et des phases pauvres en oxygène pour obtenir un taux d'oxygène réel égal à la deuxième consigne de taux d'oxygène.

Lors de la deuxième phase de régénération et lorsque la masse de suies est inférieure ou égale à ladite troisième valeur de seuil, on impose une troisième consigne de température en amont du filtre à particules, et on calcule une troisième consigne de taux d'oxygène, supérieure à la deuxième consigne de taux d'oxygène, afin d'accélérer la vitesse de combustion des particules de suies restantes, en augmentant l'alternance des phases riches en oxygène et des phases pauvres en oxygène.

Selon le procédé, on augmente le taux d'oxygène linéairement jusqu'à la troisième consigne de taux d'oxygène, en fonction de la diminution de la masse de particules de suies restantes dans le filtre à particules.

La pente de la fonction linéaire est déterminée, par exemple, de manière à obtenir un taux d'oxygène égal à la troisième consigne de taux d'oxygène à la fin de la deuxième phase lorsque la masse de suies est inférieur à une quatrième valeur de seuil ne présentant plus de risque d'emballement de la combustion.

Ensuite, on compare la masse des particules de suies dans le filtre à particules avec une quatrième valeur de seuil, et lorsque la masse des particules de suies dans le filtre à particules est supérieure à ladite quatrième valeur de seuil, on déclenche une troisième phase de régénération du filtre à particules. Lors de ladite troisième phase, on compare la masse des particules de suies dans le filtre à particules avec une cinquième valeur de seuil, par exemple égale à 0.

Tant que la masse des particules de suies dans le filtre à particules est supérieure à ladite cinquième valeur de seuil, on impose la première consigne de taux d'oxygène élevée, par exemple égale à 15%, en alternant des phases riches en oxygène et des phases pauvres en oxygène pour obtenir un taux d'oxygène réel égal à la première consigne de taux d'oxygène.

La masse des particules de suies est, par exemple, calculée à partir du débit des gaz d'échappement, mesuré par un débitmètre et de la pression différentielle obtenue par un capteur aux bornes du filtre à particules. Le calcul de la masse des particules de suies dans le filtre à particules est connu et ne sera pas davantage décrit.

Selon un deuxième aspect, l'invention concerne un système de commande de la régénération d'un filtre à particules comprenant un comprenant un module de régulation du taux d'oxygène capable de gérer le taux d'oxygène de manière pulsatoire en alternant des phases riches en oxygène délivrant un taux d'oxygène faible à l'échappement et des phases pauvres en oxygène délivrant un taux d'oxygène plus fort à l'échappement pendant toute la durée du cycle de régénération du filtre à particules.

Les phases riches sont obtenues par un réglage de la régénération comprenant notamment, le vannage de l'admission d'air frais, des injections tardives dans les cylindres du moteur, voire une injection de carburant directement dans le conduit d'échappement du moteur.

La fréquence des alternances des phases riches et pauvres en taux d'oxygène permet d'obtenir un taux d'oxygène moyen. Ainsi, on évite de définir un réglage spécifique supplémentaire pour obtenir une consigne de taux moyen souhaitée.

L'apport en oxygène permet d'accélérer la montée en température du catalyseur en amont du filtre à particules au début du cycle de régénération et d'accélérer la combustion des particules de suies dans le filtre à particules, matérialisée par un dégagement de chaleur à l'intérieur du filtre à particules.

Le système de commande comprend un module de déclenchement du début de la régénération du filtre à particules comprenant un comparateur capable de comparer la masse des particules de suies dans le filtre à particules avec une deuxième valeur de seuil. Si la masse des particules de suies dans le filtre à particules est supérieure à ladite deuxième valeur de seuil, un premier module de commande d'une première phase de la régénération est activé.

Le premier module peut comprendre un comparateur apte à comparer la température réelle mesurée en amont du filtre à particules avec une première consigne de température, par exemple égale à 650°C. Si, pendant la première phase de régénération, la température réelle mesurée en amont du filtre à particules est inférieure à la première consigne de température, le module de régulation du taux d'oxygène est activé afin d'alterner des phases riches en oxygène et des phases pauvres en oxygène pour obtenir un taux d'oxygène réel égal à une première consigne de taux d'oxygène.

En effet, le risque d'emballement de la combustion lors de cette première phase étant nul, le taux d'oxygène ne nécessite pas d'être particulièrement réduit et on peut augmenter l'alternance des phases riches en oxygène et des phases pauvres en oxygène pour produire de l'exotherme dans le catalyseur d'oxydation situé en amont du filtre à particules et favoriser ainsi la montée en température rapide en amont du filtre à particules. En effet, les incursions des phases riches (apportant des imbrûlés) puis pauvres (apportant de l'oxygène) favorisent le dégagement d'énergie sur le catalyseur d'oxydation qui stocke alternativement ces deux espèces chimiques et les brûle.

Lorsque, pendant la première phase de régénération, la température réelle mesurée en amont du filtre à particules est supérieure ou égale à la première consigne de température, un deuxième module de commande d'une deuxième phase de régénération est activé.

Le deuxième module de commande comprend un premier comparateur capable de comparer la masse des particules de suies dans le filtre à particules avec une troisième valeur de seuil, si la masse des particules de suies dans le filtre à particules est supérieure à ladite troisième valeur de seuil, le module de régulation du taux d'oxygène est activé afin d'alterner des phases riches en oxygène et des phases pauvres en oxygène pour obtenir un taux d'oxygène réel égal à une deuxième consigne de taux d'oxygène, inférieure à la première consigne de taux d'oxygène.

En effet, tant que la masse des particules de suies dans le filtre à particules est supérieure à la troisième valeur de seuil, le risque d'emballement de la combustion est maximal.

Le taux d'oxygène doit donc être réduit, en réduisant l'alternance des phases riches en oxygène et des phases pauvres en oxygène pour obtenir un taux d'oxygène réel égal à la deuxième consigne de taux d'oxygène.

Le deuxième module de commande comprend un module de calcul apte à calculer une troisième consigne de taux d'oxygène, supérieure à la deuxième consigne de taux d'oxygène. Lorsque la masse des particules de suies dans le filtre à particules est inférieure ou égale à la troisième valeur de seuil, ledit module de calcul est activé. Cette troisième consigne de taux d'oxygène permet d'accélérer la vitesse de combustion des particules de suies restantes, en augmentant l'alternance des phases riches en oxygène et des phases pauvres en oxygène.

La troisième consigne de taux d'oxygène est une fonction linéaire de la diminution de la masse de particules de suies restantes dans le filtre à particules.

La pente de la fonction linéaire est déterminée, par exemple, de manière à obtenir un taux d'oxygène égal à la troisième consigne de taux d'oxygène à la fin de la deuxième phase lorsque la masse de suies est inférieur à une quatrième valeur de seuil ne présentant plus de risque d'emballement de la combustion.

Par exemple, le deuxième module de commande comprend un deuxième comparateur capable de comparer la masse des particules de suies dans le filtre à particules avec une quatrième valeur de seuil, et si la masse des particules de suies dans le filtre à particules est inférieure ou égale à ladite quatrième valeur de seuil, un troisième module de commande d'une troisième phase de régénération est activé et active le module de régulation du taux d'oxygène afin d'alterner des phases riches en oxygène et des phases pauvres en oxygène pour obtenir un taux d'oxygène réel égal à la première consigne de taux d'oxygène.

La première consigne de taux d'oxygène élevée, par exemple égale à 15%, est imposée par le module de régulation de taux tant que la masse des particules de suies dans le filtre à particules est supérieure à une cinquième valeur de seuil, par exemple égale à 0. Ainsi, les phases riches en oxygène et les phases pauvres en oxygène sont alternées pour obtenir un taux d'oxygène réel égal à la première consigne de taux d'oxygène.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 illustre, de manière schématique, la structure d'un moteur à combustion interne d'un moteur automobile équipé d'une ligne d'échappement pourvue d'un filtre à particules associé à un système de commande de la régénération dudit filtre selon l'invention ;
- la figure 2 représente un graphique illustrant la masse de particules de suies dans le filtre à particules, les consignes de taux d'oxygène et de température en amont du filtre à particules et la température réelle mesurée en amont du filtre à particules durant tout le cycle de régénération du filtre à particules ; et
- la figure 3 illustre les étapes d'un procédé de commande de la régénération du filtre à particules selon l'invention mis en œuvre par le système de la figure 1.

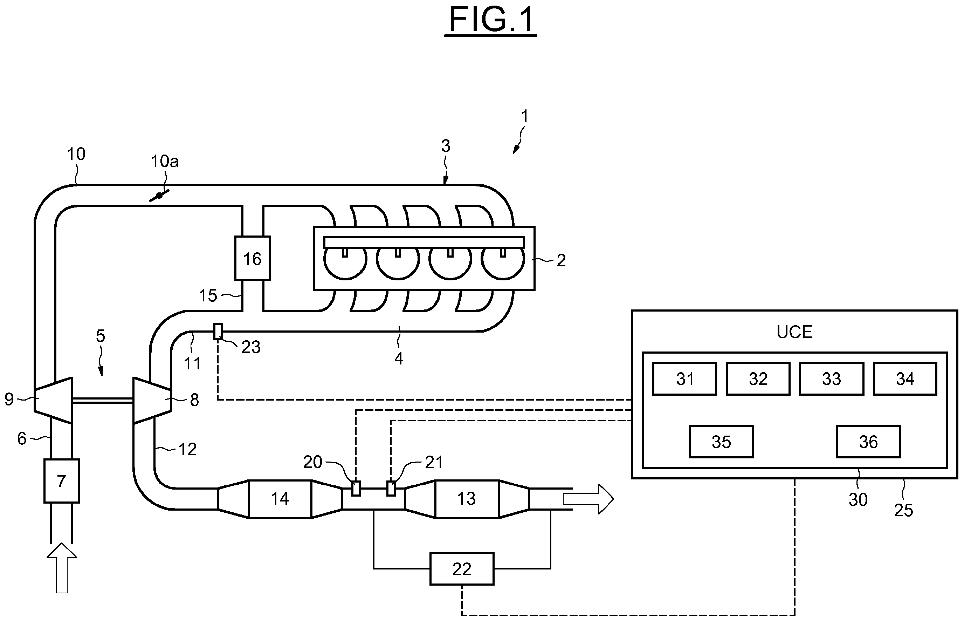

Sur la figure 1, on a représenté, de manière schématique et à titre d'exemple, la structure générale d'un moteur à combustion interne 1 d'un véhicule automobile. Cette architecture est donnée à titre d'exemple et ne limite par l'invention à la seule configuration à laquelle peut s'appliquer la commande de la régénération selon l'invention.

Dans l'exemple illustré, le moteur à combustion interne 1 comprend quatre cylindres 2 en ligne, un collecteur d'admission d'air frais 3, un collecteur d'échappement 4 et un système de turbo compression 5.

Les cylindres 2 sont alimentés en air par l'intermédiaire du répartiteur d'admission 3, lui-même alimenté par une conduite d'admission d'air frais 6 pourvue d'un filtre à air 7 et du turbocompresseur 5 de suralimentation du moteur 1 en air.

Le turbocompresseur 5 comporte essentiellement une turbine 8 entraînée par les gaz d'échappement et un compresseur 9 monté sur le même axe que la turbine 8 et assurant une compression de l'air distribué par le filtre à air 7, dans le but d'augmenter la quantité d'air admise dans les cylindres 2 du moteur 1.

Tel qu'illustré, la conduite d'alimentation d'air 10, reliant le compresseur 9 au collecteur d'admission 3, comprend une soupape d'admission principale 10a afin de réguler le débit du flux d'air entrant dans le collecteur d'admission 3.

En ce qui concerne le collecteur d'échappement 4, celui-ci récupère les gaz d'échappement issus de la combustion et évacue ces derniers vers l'extérieur, par l'intermédiaire d'un conduit d'échappement des gaz 11 débouchant sur la turbine 8 du turbocompresseur 5 et par une ligne d'échappement 12 en aval de ladite turbine 8.

En variante, ce conduit d'échappement des gaz 12 pourrait comporter une soupape de décharge (non représentée), de manière à moduler la puissance fournie par les gaz d'échappement à la turbine 8.

La ligne d'échappement 12 illustré sur la figure 1 comporte un filtre à particules 13 ainsi qu'un convertisseur catalytique d'oxydation 14, dit « Diesel oxidation catalyst » en termes anglo-saxons, disposé en amont du filtre à particules 13 et assurant essentiellement une oxydation des molécules réductrices constituées par le monoxyde de carbone (CO) et les hydrocarbures imbrûlés (HC). Ce convertisseur catalytique 14 est connu de l'homme du métier et ne sera pas davantage décrit. On notera néanmoins qu'il possède une structure monolithique et est pourvu de canaux imprégnés d'une phase catalytique, telle qu'un métal précieux, et présentant une grande surface de contact avec les gaz d'échappement. En variante, le monolithe entrant dans la constitution du convertisseur catalytique 14 peut être intégré au filtre à particules 13 afin de réaliser un couplage entre le post-traitement des gaz d'échappement par oxydation du monoxyde de carbone et des hydrocarbures imbrûlés au post-traitement des particules. En variante du convertisseur catalytique d'oxydation 14, on pourrait prévoir un autre organe de traitement d'effluents de gaz d'échappement, notamment un piège à oxydes d'azote associé au filtre à particules 13, permettant de réduire les oxydes d'azote (NOx) émis par le moteur 1 en molécules inoffensives d'azote et d'eau sous l'action d'hydrocarbures provenant du moteur.

Un circuit de recirculation 15 des gaz d'échappement à haute pression, comprenant une partie du circuit d'alimentation 10 du moteur 1 et une partie du circuit d'échappement 11, récupère une partie des gaz d'échappement et les réinjecte dans le collecteur d'admission d'air 3, afin de limiter la quantité d'oxydes d'azote produits par la combustion tout en évitant la formation de fumée dans les gaz d'échappement. Tel qu'illustré, le premier circuit de recirculation 16 comporte essentiellement un échangeur thermique 16.

On pourrait également prévoir un deuxième circuit de recirculation des gaz d'échappement basse pression (non représenté), capable de récupérer une partie des gaz d'échappement en aval du filtre à particules 13 et de les réinjecter dans le système de turbo compression 5. Un tel deuxième circuit de recirculation pourrait comporter, de manière non limitative, un filtre, un refroidisseur et une soupape de réglage du flux de gaz d'échappement recirculés refroidis. Les gaz d'échappement recirculés refroidis sont ensuite mélangés à l'air frais admis dans la conduite dans un mélangeur (non représenté).

Une sonde à oxygène 20, de type proportionnel, est située entre le convertisseur catalytique 14 et le filtre à particules 13, à l'entrée du filtre à particules 13. Le signal de sortie de la sonde à oxygène 20 est mis en forme dans une unité de commande électronique, « UCE », ou calculateur embarqué 25. Ce signal contient une information sur la teneur en oxygène résiduel Ox des gaz d'échappement et également sur le rapport momentané de carburant et d'air du mélange aspiré par le moteur 1. Le rapport air/carburant est également appelé « richesse ».

En variante non représentée, la teneur en oxygène résiduel peut provenir d'une sonde à oxygène située en amont du convertisseur catalytique 14. Elle peut encore être calculée à partir d'une valeur de débit d'air et d'une valeur de débit de carburant introduits dans le moteur.

Un capteur de température 21 avant le filtre à particules T_{av_FAP} est disposé à l'entrée du filtre à particules 13, un capteur de pression différentielle 22 est disposé aux bornes du filtre à particules 13 afin de déterminer la masse M de particules de suies dans le filtre à particules 13 et un capteur de température 23 avant turbine T_{av_T} est disposé directement en amont de la turbine 8.

Ces différents capteurs 21, 22, 23 sont également reliés à l'unité de commande électronique 25.

L'unité de commande 25 assure essentiellement le contrôle du fonctionnement du moteur 1, notamment la commande de la régénération du filtre à particules 13.

L'unité de commande électronique 25 comprend à cet effet un système 30 de commande de la régénération du filtre à particules 13 comprenant un module 31 de régulation du taux d'oxygène capable de gérer le taux d'oxygène de manière pulsatoire en alternant des phases dites « riches » délivrant un taux d'oxygène à l'échappement faible et des phases dites « pauvres » délivrant un taux d'oxygène à l'échappement plus fort, et ce pendant toute la durée du cycle R de régénération du filtre à particules 13.

Les phases riches sont obtenues par un réglage de la régénération comprenant notamment, le vannage de l'admission d'air frais 10a, des injections tardives dans les cylindres 2 du moteur 1, voire une injection de carburant directement dans le conduit d'échappement 12 du moteur.

La fréquence des alternances des phases riches et pauvres en taux d'oxygène permet d'obtenir un taux d'oxygène moyen. Ainsi, on évite de définir un réglage spécifique supplémentaire pour obtenir une consigne de taux d'oxygène moyen en amont du filtre à particules souhaitée.

L'apport en oxygène permet d'accélérer la montée en température du catalyseur 14 en amont du filtre à particules 13 au début du cycle de régénération R et d'accélérer la combustion des particules de suies dans le filtre à particules 13, matérialisée par un dégagement de chaleur à l'intérieur du filtre à particules 13.

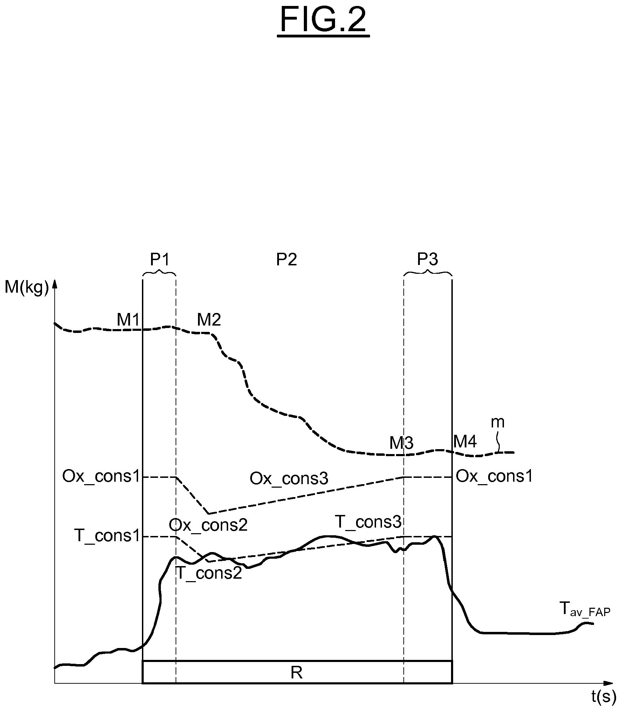

Le cycle de régénération du filtre à particules 13 comprend trois phases P1, P2, P3 visibles sur la figure 2.

La première phase P1 du cycle R de régénération du filtre à particules 13 correspond au début de la régénération dudit filtre à particules, plus précisément à la phase de montée en température du filtre au début de la régénération. Dans cette première phase P1, la température T_{av_FAP} en amont du filtre à particules 13 monte progressivement jusqu'à une première valeur de seuil T1, par exemple comprise entre 600°C et 700°C. La première valeur de seuil T1 correspond à la température minimale suffisante pour amorcer le processus de combustion des particules de suies dans le filtre à particules 13.

La deuxième phase P2 du cycle R de régénération du filtre à particules 13 correspond à la régénération du filtre à particules 13.

Pendant la deuxième phase P2 de régénération, la masse M de particules de suies diminue, ainsi que le risque d'emballement de la combustion.

La troisième et dernière phase de régénération P3 du cycle R de régénération du filtre à particules 13 correspond à la fin de la régénération dudit filtre à particules. Dans cette troisième phase P3, la masse M de particules de suies restante dans le filtre à particules 13 ne présente plus de risque d'emballement de la combustion.

Le système de commande 30 comprend un module 32 de déclenchement du début de la régénération du filtre à particules 13. Ledit module de déclenchement 32 comprend un comparateur (non représenté) apte à comparer la masse des particules de suies M dans le filtre à particules 13 avec une deuxième valeur de seuil M1. Si la masse des particules de suies M dans le filtre à particules 13 est supérieure à une deuxième valeur de seuil M1, la première phase P1 de régénération est déclenchée.

Le système de commande 30 de la régénération comprend un premier module 33 de commande de la régénération pendant la première phase P1.

Le premier module 33 comprend un comparateur (non représenté) apte à comparer la température réelle T_{av_FAP} mesurée par le capteur 20 en amont du filtre à particules 13 avec une première consigne de température T_cons1 en amont du filtre à particules 13, par exemple égale à 650°C.

Lorsque, pendant la première phase P1 de régénération, la température réelle T_{av_FAP} mesurée en amont du filtre à particules 13 est inférieure à la première consigne de température T_cons1, le module 31 de régulation du taux d'oxygène est activé afin d'alterner des phases riches en oxygène et des phases pauvres en oxygène pour obtenir un taux d'oxygène réel égal à une première consigne de taux d'oxygène Ox_cons1.

En effet, le risque d'emballement de la combustion lors de cette première phase P1 étant nul, la température n'étant pas suffisante pour amorcer la combustion des particules de suie, le taux d'oxygène ne nécessite pas d'être particulièrement réduit et on peut augmenter l'alternance des phases riches en oxygène et des phases pauvres en oxygène pour obtenir produire de l'exotherme dans le catalyseur d'oxydation 14 situé en amont du filtre à particules 13 et favoriser ainsi la montée en température rapide en amont du filtre à particules 13. En effet, les incursions des phases riches (apportant des imbrûlés) puis pauvres (apportant de l'oxygène) favorisent le dégagement d'énergie sur le catalyseur d'oxydation 14 qui stocke alternativement ces deux espèces chimiques et les brûle.

Lorsque, pendant la première phase P1 de régénération, la température réelle T_{av_FAP} mesurée en amont du filtre à particules 13 est supérieure ou égale à la première consigne de température T_cons1, le système de commande 30 active un deuxième module 34 de commande de la deuxième phase P2 de régénération.

Le deuxième module 34 de commande comprend comparateur (non représenté) capable de comparer la masse M de particules de suies dans le filtre à particules 13 avec une troisième valeur de seuil M2.

Lorsque la masse des particules de suies M dans le filtre à particules 13 est supérieure à une troisième valeur de seuil M2, le module 31 de régulation du taux d'oxygène est activé afin d'alterner des phases riches en oxygène et des phases pauvres en oxygène pour obtenir un taux d'oxygène réel égal à une deuxième consigne de taux d'oxygène Ox_cons2, inférieure à la première consigne de taux d'oxygène Ox_cons1.

En effet, tant que la masse des particules de suies M dans le filtre à particules 13 est supérieure à la troisième valeur de seuil M2, le risque d'emballement de la combustion est maximal.

Le taux d'oxygène Ox doit donc être réduit, en réduisant l'alternance des phases riches en oxygène et des phases pauvres en oxygène pour obtenir un taux d'oxygène réel égal à la deuxième consigne de taux d'oxygène Ox_cons2.

Lorsque la masse M des particules de suies dans le filtre à particules 13 est inférieure ou égale à la troisième valeur de seuil M2, un module 35 de calcul d'une troisième consigne de taux d'oxygène Ox_cons3, supérieure à la deuxième consigne de taux d'oxygène Ox_cons2, est activé. Cette troisième consigne de taux d'oxygène Ox_cons3 permet d'accélérer la vitesse de combustion des particules de suies restantes, en augmentant l'alternance des phases riches en oxygène et des phases pauvres en oxygène. Le taux d'oxygène Ox est ainsi augmenté linéairement en fonction de la diminution de la masse M de particules de suies restantes dans le filtre à particules 13.

La pente de la fonction linéaire est déterminée, par exemple, de manière à obtenir un taux d'oxygène égal à la troisième consigne de taux d'oxygène Ox_cons3 à la fin de la deuxième phase P2 lorsque la masse de suies est inférieure à une quatrième valeur de seuil M3 ne présentant plus de risque d'emballement de la combustion.

Enfin, le système de commande 31 comprend un troisième module 36 de commande de la troisième phase P3 de régénération.

Si la masse M des particules de suies dans le filtre à particules 13 est inférieure ou égale à ladite quatrième valeur de seuil M3, le troisième module 36 de commande est activé, lesdites masses étant comparées dans un deuxième comparateur du deuxième module 34 de commande.

Le troisième module 36 de commande active le module 31 de régulation du taux d'oxygène afin d'imposer la première consigne de taux d'oxygène Ox_cons1 élevée, par exemple égale à 15%, tant que la masse des particules de suies M dans le filtre à particules 13 est supérieure à une cinquième valeur de seuil M4, par exemple égale à 0. Ainsi, les phases riches en oxygène et les phases pauvres en oxygène sont alternées pour obtenir un taux d'oxygène Ox réel égal à la première consigne de taux d'oxygène Ox_cons1.

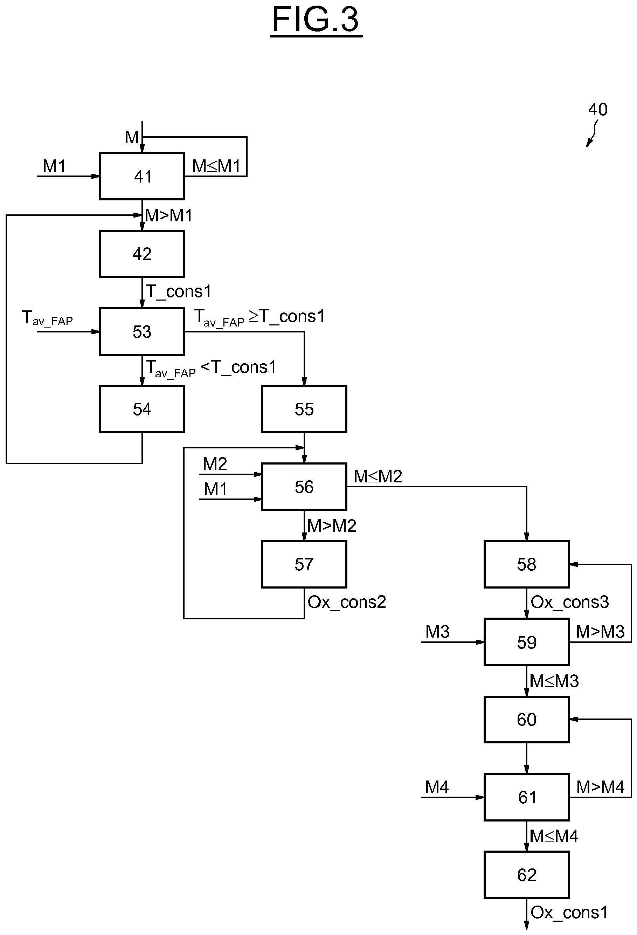

La figure 3 représente un organigramme de mise en œuvre d'un procédé 40 de commande de la régénération du filtre à particules 13 capable de gérer le taux d'oxygène de manière pulsatoire en alternant des phases dites « riches » délivrant un taux d'oxygène à l'échappement faible et des phases dites « pauvres » délivrant un taux d'oxygène à l'échappement plus fort.

Les phases riches sont obtenues par un réglage de la régénération comprenant notamment, le vannage de l'admission d'air frais, des injections tardives dans les cylindres du moteur, voire une injection de carburant directement dans le conduit d'échappement du moteur.

La fréquence des alternances des phases riches et pauvres en taux d'oxygène permet d'obtenir un taux d'oxygène moyen. Ainsi, on évite de définir un ou plusieurs réglages spécifiques supplémentaires du moteur pour obtenir une consigne souhaitée et continûment variable de taux moyen d'oxygène à l'entrée du filtre à particules.

L'apport en oxygène permet d'accélérer la montée en température du catalyseur 14 en amont du filtre à particules 13 début du cycle de régénération et d'accélérer la combustion des particules de suies dans la filtre à particules 13, matérialisée par un dégagement de chaleur à l'intérieur du filtre à particules 13.

Le cycle de régénération du filtre à particules 13 comprend trois phases P1, P2, P3 visibles sur la figure 2.

Le début de la régénération R peut être déclenché lorsque la masse des particules de suies M dans le filtre à particules 13 est supérieure à une deuxième valeur de seuil M1. Ainsi, on compare, lors d'une première étape 41, la masse des particules de suies M dans le filtre à particules 13 avec une deuxième valeur de seuil M1.

La première phase P1 de régénération R correspond au début de la régénération du filtre à particules 13. Dans cette première phase P1, la température T_{av_FAP} en amont du filtre à particules 13 monte progressivement jusqu'à une première valeur de seuil T1, par exemple comprise entre 600°C et 700°C. La première valeur de seuil T1 correspond à la température minimale suffisante pour amorcer le processus de combustion des particules de suies dans le filtre à particules 13.

Lors de cette première phase P1, l'unité de contrôle électronique 25 impose, via le système de commande 30, à l'étape 42, une première consigne de température T_cons1 en amont du filtre à particules 13, par exemple égale à 650°C.

A l'étape 53, on compare la température réelle mesurée T_{av_FAP} en amont du filtre à particules 13 avec ladite première consigne de température T_cons1.

Si la température réelle T_{av_FAP} mesurée par le capteur 20 en amont du filtre à particules 13 est inférieure à ladite première consigne de température T_consl, le système de commande 30 commande, à l'étape 54, la première phase P1 de régénération en imposant une première consigne de taux d'oxygène Ox_cons1 élevée, par exemple égale à 15%. Pour cela, le système de commande 30 alterne des phases riches en oxygène et des phases pauvres en oxygène pour obtenir un taux d'oxygène réel égal à la première consigne de taux d'oxygène Ox_cons1.

En effet, le risque d'emballement de la combustion lors de cette première phase P1 étant nul, le taux d'oxygène ne nécessite pas d'être particulièrement réduit et on peut augmenter l'alternance des phases riches en oxygène et des phases pauvres en oxygène pour obtenir produire de l'exotherme dans le catalyseur d'oxydation 14 situé en amont du filtre à particules 13 et favoriser ainsi la montée en température rapide en amont du filtre à particules 13. En effet, les incursions des phases riches (apportant des imbrûlés) puis pauvres (apportant de l'oxygène) favorisent le dégagement d'énergie sur le catalyseur d'oxydation 14 qui stocke alternativement ces deux espèces chimiques et les brûle.

Si la température réelle T_{av_FAP} mesurée par le capteur 20 en amont du filtre à particules 13 est supérieure ou égale à ladite première consigne de température T_consl, le système de commande 30 commande, à l'étape 55, la deuxième phase P2 de régénération.

La deuxième phase P2 correspond à la régénération du filtre à particules 13. Au début de cette deuxième phase P2, la température T_{av_FAP} en amont du filtre à particules 13 est supérieure ou égale à la première consigne de température T_cons1 en amont du filtre à particules 13 imposée par le système de commande 30.

Pendant la phase de régénération P2, la masse M de particules de suies diminue, ainsi que le risque d'emballement de la combustion.

Le système de commande 30 compare, à l'étape 56, la masse des particules de suies M dans le filtre à particules 13 avec une troisième valeur de seuil M2.

Tant que la masse M des particules de suies dans le filtre à particules 13 est supérieure à la troisième valeur de seuil M2, le risque d'emballement de la combustion est maximal.

Lorsque la masse de suies M est supérieure à ladite troisième valeur de seuil M2, le système de commande 30 impose, à l'étape 57, une deuxième consigne de température T_cons2 en amont du filtre à particules 13, par exemple égale à 400°C et impose une deuxième consigne de taux d'oxygène Ox_cons2 réduite, en réduisant l'alternance des phases riches en oxygène et des phases pauvres en oxygène pour obtenir un taux d'oxygène réel égal à la deuxième consigne de taux d'oxygène Ox_cons2.

Lorsque la masse de suies M est égale à ladite troisième valeur de seuil M2, le système de commande 30 impose, à l'étape 58, une troisième consigne de température T_cons3 en amont du filtre à particules 13, et calcule également une troisième consigne de taux d'oxygène Ox_cons3, supérieure à la deuxième consigne de taux d'oxygène Ox_cons2 afin d'accélérer la vitesse de combustion des particules de suies restantes, en augmentant l'alternance des phases riches en oxygène et des phases pauvres en oxygène. Le taux d'oxygène Ox est ainsi augmenté linéairement en fonction de la diminution de la masse M de particules de suies restantes dans le filtre à particules 13.

La pente de la fonction linéaire est déterminée, par exemple, de manière à obtenir un taux d'oxygène égal à la troisième consigne de taux d'oxygène Ox_cons3 à la fin de la deuxième phase P2 lorsque la masse de suies est inférieure à une quatrième valeur de seuil M3 ne présentant plus de risque d'emballement de la combustion.

Ainsi, à l'étape 59, la masse M de suies est comparée avec une quatrième valeur de seuil M3.

Lorsque la masse de suies est supérieure à ladite quatrième valeur de seuil M3, on maintient la troisième consigne de taux d'oxygène Ox_cons3.

Lorsque la masse de suies est inférieure ou égale à ladite quatrième valeur de seuil M3, on active, à l'étape 60, la troisième et dernière phase P3 de régénération qui correspond à la fin de la régénération du filtre à particules 13. Dans cette troisième phase P3, la masse M de particules de suies restante dans le filtre à particules 13 ne présente plus de risque d'emballement de la combustion.

Pendant cette troisième phase P3, on compare, à l'étape 61, la masse M des particules de suies dans le filtre à particules 13 avec une cinquième valeur de seuil M4, par exemple égale à 0. Tant que la masse M des particules de suies dans le filtre à particules 13 est supérieure à ladite cinquième valeur de seuil M4, le système de commande 30 impose, à l'étape 62, la première consigne de taux d'oxygène Ox_cons1 élevée, par exemple égale à 15%, en alternant des phases riches en oxygène et des phases pauvres en oxygène pour obtenir un taux d'oxygène réel égal à la première consigne de taux d'oxygène Ox_cons1.

La masse M des particules de suies est, par exemple, calculée à partir du débit des gaz d'échappement, mesuré par un débitmètre (non représenté) et de la pression différentielle obtenue par le capteur 22 aux bornes du filtre à particules 13. Le calcul de la masse M des particules de suies dans le filtre à particules 13 est connu et ne sera pas davantage décrite.

Ainsi, on fait varier le taux d'oxygène moyen en alternant des phases riches en oxygène et des phases pauvres en oxygène pendant toute la durée du cycle de régénération.

Enfin, la présente invention permet une évolution continue linéaire du taux d'oxygène en fonction de la baisse de la masse de particules de suies dans le filtre à particules.

Grâce à la présente invention, le taux d'oxygène maximal n'est pas limité tout au long du processus de régénération du filtre à particules afin de limiter l'emballement de combustion. En effet, ce taux d'oxygène dans le filtre à particules est ici en évolution permanente.

## Revendications

1. Procédé (40) de commande de la régénération d'un filtre à particules (13) dans lequel on fait varier le taux d'oxygène moyen en alternant des phases riches en oxygène et des phases pauvres en oxygène pendant toute la durée d'un cycle de régénération (R) du filtre à particules (13), dans lequel :
- on compare une masse (M) des particules de suies dans le filtre à particules (13) avec une deuxième valeur de seuil (M1) et on déclenche une première phase (P1) du cycle de régénération (R) lorsque la masse (M) des particules de suies dans le filtre à particules (13) est supérieure à une deuxième valeur de seuil (M1), lors du déclenchement de la régénération, on impose une première consigne de température (T_cons1) en amont du filtre à particules (13),
- lorsque une température (T_{av_FAP}) mesurée en amont du filtre à particules (13) est supérieure ou égale à une première consigne de température (T_cons1), on déclenche une deuxième phase (P2) de régénération du filtre à particules (13) lors de laquelle on compare la masse (M) des particules de suies dans le filtre à particules (13) avec une troisième valeur de seuil (M2) et tant que la masse (M) des particules de suies dans le filtre à particules (13) est supérieure à ladite troisième valeur de seuil (M2) et que la température (T_{av_FAP}) mesurée en amont du filtre à particules (13) est supérieure ou égale à la première consigne de température (T_cons1), on impose une deuxième consigne de température (T_cons2) en amont du filtre à particules (13), et on impose une deuxième consigne de taux d'oxygène (Ox_cons2) réduite, en réduisant l'alternance des phases riches en oxygène et des phases pauvres en oxygène pour obtenir un taux d'oxygène réel égal à la deuxième consigne de taux d'oxygène (Ox_cons2),
lors de ladite deuxième phase (P2) de régénération, lorsque la masse (M) de suies est inférieure ou égale à ladite troisième valeur de seuil (M2), on impose une troisième consigne de température (T_cons3) en amont du filtre à particules (13), et on calcule une troisième consigne de taux d'oxygène (Ox_cons3), supérieure à la deuxième consigne de taux d'oxygène (Ox_cons2) en augmentant l'alternance des phases riches en oxygène et des phases pauvres en oxygène, **caractérisé en ce que** l'on augmente le taux d'oxygène (Ox) linéairement jusqu'à la troisième consigne de taux d'oxygène (Ox_cons3), en fonction de la diminution de la masse (M) de particules de suies restantes dans le filtre à particules (13).

2. Procédé selon la revendication 1, dans lequel, on compare la température réelle mesurée en amont du filtre à particules (13) avec ladite première consigne de température (T_cons1), et tant que ladite température réelle (T_{av_FAP}) mesurée est inférieure à ladite première consigne de température (T_cons1), on impose une première consigne de taux d'oxygène (Ox_cons1) élevée en alternant des phases riches en oxygène et des phases pauvres en oxygène pour obtenir un taux d'oxygène réel égal à la première consigne de taux d'oxygène (Ox_cons1).

3. Procédé selon la revendication 1 ou 2, dans lequel on compare la masse (M) des particules de suies dans le filtre à particules (13) avec une quatrième valeur de seuil (M3), et lorsque la masse (M) des particules de suies dans le filtre à particules (13) est supérieure à ladite quatrième valeur de seuil (M3), on déclenche une troisième phase (P3) de régénération du filtre à particules (13), lors de ladite troisième phase (P3), on compare la masse (M) des particules de suies dans le filtre à particules (13) avec une cinquième valeur de seuil (M4), et tant que la masse (M) des particules de suies dans le filtre à particules (13) est supérieure à ladite cinquième valeur de seuil (M4), on impose la première consigne de taux d'oxygène (Ox_cons1) élevée, en alternant des phases riches en oxygène et des phases pauvres en oxygène pour obtenir un taux d'oxygène réel égal à la première consigne de taux d'oxygène (Ox_cons1).

4. Système (30) de commande de la régénération d'un filtre à particules (13) comprenant :
un module (31) de régulation du taux d'oxygène capable de gérer le taux d'oxygène de manière pulsatoire en alternant des phases riches en oxygène délivrant un taux d'oxygène faible à l'échappement et des phases pauvres en oxygène délivrant un taux d'oxygène plus fort à l'échappement pendant toute la durée du cycle (R) de régénération du filtre à particules (13)
un module (32) de déclenchement du début de la régénération du filtre à particules (13) comprenant un comparateur capable de comparer la masse (M) des particules de suies dans le filtre à particules (13) avec une deuxième valeur de seuil (M1), si la masse (M) des particules de suies dans le filtre à particules (13) est supérieure à ladite deuxième valeur de seuil (M1), un premier module (33) de commande d'une première phase de la régénération est activé, lorsque, pendant la première phase (P1) de régénération, la température réelle (T_{av_FAP}) mesurée en amont du filtre à particules (13) est supérieure ou égale à la première consigne de température (T_cons1), un deuxième module (34) de commande de la deuxième phase (P2) de régénération est activé, le deuxième module (34) de commande comprenant un premier comparateur capable de comparer la masse (M) des particules de suies dans le filtre à particules (13) avec une troisième valeur de seuil (M2), si la masse (M) des particules de suies dans le filtre à particules (13) est supérieure à ladite troisième valeur de seuil (M2), le module (31) de régulation du taux d'oxygène est activé afin d'alterner des phases riches en oxygène et des phases pauvres en oxygène pour obtenir un taux d'oxygène réel égal à une deuxième consigne de taux d'oxygène (Ox_cons2), inférieure à la première consigne de taux d'oxygène (Ox_cons1), lorsque la masse (M) des particules de suies (M) dans le filtre à particules (13) est inférieure ou égale à la troisième valeur de seuil (M2), un module (35) de calcul du deuxième module (34) de commande calcule une troisième consigne de taux d'oxygène (Ox_cons3), supérieure à la deuxième consigne de taux d'oxygène (Ox_cons2), est activé, **caractérisé en ce que** la troisième consigne de taux d'oxygène (Ox_cons3) est une fonction linéaire de la diminution de la masse (M) de particules de suies restantes dans le filtre à particules (13).

5. Système de commande selon la revendication 4, dans lequel le premier module (33) comprend un comparateur apte à comparer la température réelle mesurée (T_{av_FAP}) en amont du filtre à particules (13) avec une première consigne de température (T_cons1) en amont du filtre à particules (13), si, pendant la première phase (P1) de régénération, la température réelle (T_{av_FAP}) mesurée en amont du filtre à particules (13) est inférieure à la première consigne de température (T_cons1), le module (31) de régulation du taux d'oxygène est activé afin d'alterner des phases riches en oxygène et des phases pauvres en oxygène pour obtenir un taux d'oxygène réel égal à une première consigne de taux d'oxygène (Ox_cons1).

6. Système de commande selon la revendication 5 ou 4, dans lequel le deuxième module (34) de commande comprend un deuxième comparateur capable de comparer la masse (M) des particules de suies dans le filtre à particules (13) avec une quatrième valeur de seuil (M3), si la masse (M) des particules de suies dans le filtre à particules (13) est inférieure ou égale à ladite quatrième valeur de seuil (M3), un troisième module (36) de commande d'une troisième phase (P3) de régénération est activé et active le module (31) de régulation du taux d'oxygène afin d'alterner des phases riches en oxygène et des phases pauvres en oxygène pour obtenir un taux d'oxygène réel égal à la première consigne de taux d'oxygène (Ox_cons1).

## Patentansprüche

1. Verfahren (40) zur Steuerung der Regeneration eines Partikelfilters (13), wobei der mittlere Sauerstoffgehalt durch das Abwechseln von sauerstoffreichen Phasen und sauerstoffarmen Phasen während der gesamten Dauer eines Regenerationszyklus (R) des Partikelfilters (13) variiert wird, wobei:
- eine Masse (M) der Rußpartikel in dem Partikelfilter (13) mit einem zweiten Schwellenwert (M1) verglichen wird und eine erste Phase (P1) des Regenerationszyklus (R) ausgelöst wird, wenn die Masse (M) der Rußpartikel in dem Partikelfilter (13) größer als ein zweiter Schwellenwert (M1) ist, wobei beim Auslösen der Regeneration ein erster Temperatursollwert (T_cons1) stromaufwärts des Partikelfilters (13) vorgegeben wird,
- wenn eine stromaufwärts des Partikelfilters (13) gemessene Temperatur (T_{av_FAP}) größer als oder gleich einem ersten Temperatursollwert (T_cons1) ist, eine zweite Regenerationsphase (P2) des Partikelfilters (13) ausgelöst wird, bei der die Masse (M) der Rußpartikel in dem Partikelfilter (13) mit einem dritten Schwellenwert (M2) verglichen wird, und sofern die Masse (M) der Rußpartikel in dem Partikelfilter (13) größer als der dritte Schwellenwert (M2) ist und die stromaufwärts des Partikelfilters (13) gemessene Temperatur (T_{av_FAP}) größer als oder gleich dem ersten Temperatursollwert (T_cons1) ist, ein zweiter Temperatursollwert (T_cons2) stromaufwärts des Partikelfilters (13) vorgegeben wird und ein zweiter, verringerter Sauerstoffgehaltsollwert (Ox_cons2) vorgegeben wird, indem das Abwechseln zwischen den sauerstoffreichen Phasen und den sauerstoffarmen Phasen verringert wird, um einen effektiven Sauerstoffgehalt zu erhalten, der gleich dem zweiten Sauerstoffgehaltsollwert (Ox_cons2) ist,
wenn bei der zweiten Regenerationsphase (P2) die Rußmasse (M) kleiner als oder gleich dem dritten Schwellenwert (M2) ist, ein dritter Temperatursollwert (T_cons3) stromaufwärts des Partikelfilters (13) vorgegeben wird und ein dritter Sauerstoffgehaltsollwert (Ox_cons3) berechnet wird, der größer als der zweite Sauerstoffgehaltsollwert (Ox_cons2) ist, indem das Abwechseln zwischen den sauerstoffreichen Phasen und den sauerstoffarmen Phasen erhöht wird, **dadurch gekennzeichnet, dass** der Sauerstoffgehalt (Ox) in Abhängigkeit von dem Rückgang der Masse (M) von in dem Partikelfilter (13) verbleibenden Rußpartikeln linear bis zu dem dritten Sauerstoffgehaltsollwert (Ox_cons3) erhöht wird.

2. Verfahren nach Anspruch 1, wobei die stromaufwärts des Partikelfilters (13) gemessene effektive Temperatur mit dem ersten Temperatursollwert (T_cons1) verglichen wird und, sofern die gemessene effektive Temperatur (T_{av_FAP}) kleiner als der erste Temperatursollwert (T_cons1) ist, ein erster hoher Sauerstoffgehaltsollwert (Ox_cons1) vorgegeben wird, indem man sauerstoffreiche Phasen und sauerstoffarme Phasen miteinander abwechseln lässt, um einen effektiven Sauerstoffgehalt zu erhalten, der gleich dem ersten Sauerstoffgehaltsollwert (Ox_cons1) ist.

3. Verfahren nach Anspruch 1 oder 2, wobei die Masse (M) der Rußpartikel in dem Partikelfilter (13) mit einem vierten Schwellenwert (M3) verglichen wird und, wenn die Masse (M) der Rußpartikel in dem Partikelfilter (13) größer als der vierte Schwellenwert (M3) ist, eine dritte Regenerationsphase (P3) des Partikelfilters (13) ausgelöst wird, wobei bei der dritten Phase (P3) die Masse (M) der Rußpartikel in dem Partikelfilter (13) mit einem fünften Schwellenwert (M4) verglichen wird und, sofern die Masse (M) der Rußpartikel in dem Partikelfilter (13) größer als der fünfte Schwellenwert (M4) ist, der erste hohe Sauerstoffgehaltsollwert (Ox_cons1) vorgegeben wird, indem man sauerstoffreiche Phasen und sauerstoffarme Phasen miteinander abwechseln lässt, um einen effektiven Sauerstoffgehalt zu erhalten, der gleich dem ersten Sauerstoffgehaltsollwert (Ox_cons1) ist.

4. Anlage (30) zur Steuerung der Regeneration eines Partikelfilters (13), beinhaltend:
ein Modul (31) zur Regelung des Sauerstoffgehalts, das fähig ist, den Sauerstoffgehalt pulsierend zu verwalten, indem es sauerstoffreiche Phasen, die einen geringen Sauerstoffgehalt am Auslass liefern, und sauerstoffarme Phasen, die einen stärkeren Sauerstoffgehalt am Auslass liefern, während der gesamten Dauer des Regenerationszyklus (R) des Partikelfilters (13) miteinander abwechseln lässt,
ein Modul (32) zur Auslösung des Beginns der Regeneration des Partikelfilters (13), beinhaltend einen Komparator, der fähig ist, die Masse (M) der Rußpartikel in dem Partikelfilter (13) mit einem zweiten Schwellenwert (M1) zu vergleichen, wobei, falls die Masse (M) der Rußpartikel in dem Partikelfilter (13) größer als der zweite Schwellenwert (M1) ist, ein erstes Modul (33) zur Steuerung einer ersten Phase der Regeneration aktiviert wird, wenn während der ersten Regenerationsphase (P1) die stromaufwärts des Partikelfilters (13) gemessene effektive Temperatur (T_{av_FAP}) größer als oder gleich dem ersten Temperaturschwellenwert (T_cons1) ist, ein zweites Modul (34) zur Steuerung der zweiten Regenerationsphase (P2) aktiviert wird, wobei das zweite Modul (34) zur Steuerung einen ersten Komparator beinhaltet, der fähig ist, die Masse (M) der Rußpartikel in dem Partikelfilter (13) mit einem dritten Schwellenwert (M2) zu vergleichen, falls die Masse (M) der Rußpartikel in dem Partikelfilter (13) größer als der dritte Schwellenwert (M2) ist, das Modul (31) zur Regelung des Sauerstoffgehalts aktiviert wird, um sauerstoffreiche Phasen und sauerstoffarme Phasen miteinander abwechseln zu lassen, um einen effektiven Sauerstoffgehalt zu erhalten, der gleich einem zweiten Sauerstoffgehaltsollwert (Ox_cons2) ist, der kleiner als der erste Sauerstoffgehaltsollwert (Ox_cons1) ist, wenn die Masse (M) der Rußpartikel (M) in dem Partikelfilter (13) kleiner als oder gleich dem dritten Schwellenwert (M2) ist, ein Modul (35) zur Berechnung des zweiten Moduls (34) zur Steuerung einen dritten Sauerstoffgehaltsollwert (Ox_cons3) berechnet, der größer als der zweite Sauerstoffgehaltsollwert (Ox_cons2) ist, aktiviert wird, **dadurch gekennzeichnet, dass** der dritte Sauerstoffgehaltsollwert (Ox_cons3) eine lineare Funktion des Rückgangs der Masse (M) von in dem Partikelfilter (13) verbleibenden Rußpartikeln ist.

5. System zur Steuerung nach Anspruch 4, wobei das erste Modul (33) einen Komparator beinhaltet, der in der Lage ist, die stromaufwärts des Partikelfilters (13) gemessene effektive Temperatur (T_{av_FAP}) mit einem ersten Temperatursollwert (T_cons1) stromaufwärts des Partikelfilters (13) zu vergleichen, falls während der ersten Regenerationsphase (P1) die stromaufwärts des Partikelfilters (13) gemessene effektive Temperatur (T_{av_FAP}) kleiner als der erste Temperatursollwert (T_cons1) ist, das Modul (31) zur Regelung des Sauerstoffgehalts aktiviert wird, um sauerstoffreiche Phasen und sauerstoffarme Phasen miteinander abwechseln zu lassen, um einen effektiven Sauerstoffgehalt gleich einem ersten Sauerstoffgehaltsollwert (Ox_cons1) zu erhalten.

6. System zur Steuerung nach Anspruch 5 oder 4, wobei das zweite Modul (34) zur Steuerung einen zweiten Komparator beinhaltet, der fähig ist, die Masse (M) der Rußpartikel in dem Partikelfilter (13) mit einem vierten Schwellenwert (M3) zu vergleichen, falls die Masse (M) der Rußpartikel in dem Partikelfilter (13) kleiner als oder gleich dem vierten Schwellenwert (M3) ist, ein drittes Modul (36) zur Steuerung einer dritten Regenerationsphase (P3) aktiviert wird und das Modul (31) zur Regelung des Sauerstoffgehalts aktiviert, um sauerstoffreiche Phasen und sauerstoffarme Phasen miteinander abwechseln zu lassen, um einen effektiven Sauerstoffgehalt zu erhalten, der gleich dem ersten Sauerstoffgehaltsollwert (Ox_cons1) ist.

## Claims

1. Method (40) for controlling the regeneration of a particulate filter (13), in which the mean oxygen content is varied by alternating oxygen-rich phases with oxygen-lean phases throughout the duration of a regeneration cycle (R) of the particulate filter (13), in which:
- a mass (M) of the soot particles in the particulate filter (13) is compared with a second threshold value (M1) and a first phase (P1) of the regeneration cycle (R) is initiated when the mass (M) of soot particles in the particulate filter (13) is above a second threshold value (M1), and as regeneration is initiated a first temperature setpoint (T_cons1) is imposed upstream of the particulate filter (13),
- when a temperature (T_{av_FAP}) measured upstream of the particulate filter (13) is above or equal to a first temperature setpoint (T_cons1), a second phase (P2) of the regeneration of the particulate filter (13) is initiated, during which second phase the mass (M) of the soot particles in the particulate filter (13) is compared against a third threshold value (M2) and so long as the mass (M) of the soot particles in the particulate filter (13) is above said third threshold value (M2) and at the same time the temperature (T_{av_FAP}) measured upstream of the particulate filter (13) is above or equal to the first temperature setpoint (T_cons1), a second temperature setpoint (T_cons2) is imposed upstream of the particulate filter (13), and a reduced second oxygen content setpoint (Ox_cons2) is imposed, by reducing the alternation of oxygen-rich phases and oxygen-lean phases in order to obtain an actual oxygen content equal to the second oxygen content setpoint (Ox_cons2),
during said second regeneration phase (P2), when the mass (M) of soot is below or equal to said third threshold value (M2), a third temperature setpoint (T_cons3) is imposed upstream of the particulate filter (13) and a third oxygen content setpoint (Ox_cons3), higher than the second oxygen content setpoint (Ox_cons2) is calculated by increasing the alternation of oxygen-rich phases with oxygen-lean phases, **characterized in that** the oxygen content (Ox) is increased linearly as far as the third oxygen content setpoint (Ox_cons3) as a function of the reduction in the mass (M) of soot particles remaining in the particulate filter (13).

2. Method according to Claim 1, in which the actual temperature measured upstream of the particulate filter (13) is compared against said first temperature setpoint (T_cons1), and so long as said actual temperature (T_{av_FAP}) measured is below said first temperature setpoint (T_cons1), a high first oxygen content setpoint (Ox_cons1) is imposed by alternating oxygen-rich phases with oxygen-lean phases in order to obtain an actual oxygen content equal to the first oxygen content setpoint (Ox_cons1).

3. Method according to Claim 1 or 2, in which the mass (M) of soot particles in the particulate filter (13) is compared against a fourth threshold value (M3), and when the mass (M) of the soot particles in the particulate filter (13) is above said fourth threshold value (M3), a third phase (P3) of the regeneration of the particulate filter (13) is initiated, and during said third phase (P3) the mass (M) of the soot particles in the particulate filter (13) is compared against a fifth threshold value (M4), and so long as the mass (M) of the soot particles in the particulate filter (13) is above said fifth threshold value (M4), the high first oxygen content setpoint (Ox_cons1) is imposed, by alternating oxygen-rich phases with oxygen-lean phases in order to obtain an actual oxygen content equal to the first oxygen content setpoint (Ox_cons1).

4. System (30) for controlling the regeneration of a particulate filter (13) comprising:
an oxygen-content regulating module (31) capable of managing the oxygen content in a pulsatory manner by alternating oxygen-rich phases delivering a low oxygen content to the exhaust and oxygen-lean phases delivering a higher oxygen content to the exhaust throughout the duration of the regeneration cycle (R) for regenerating the particulate filter (13)
a module (32) initiating the start of the regeneration of the particulate filter (13) and comprising a comparator capable of comparing the mass (M) of the soot particles in the particulate filter (13) with a second threshold value (M1), if the mass (M) of the soot particles in the particulate filter (13) is above said second threshold value (M1), a first control module (33) controlling a first phase of the regeneration is activated, when, during the first phase (P1) of the regeneration, the actual temperature (T_{av_FAP}) measured upstream of the particulate filter (13) is above or equal to the first temperature setpoint (T_cons1), a second control module (34) controlling the second phase (P2) of the regeneration is activated, the second control module (34) comprising a first comparator capable of comparing the mass (M) of the soot particles in the particulate filter (13) against a third threshold value (M2), if the mass (M) of the soot particles in the particulate filter (13) is higher than said third threshold value (M2), the oxygen content regulating module (31) is activated in order to alternate oxygen-rich phases with oxygen-lean phases in order to obtain an actual oxygen content equal to a second oxygen content setpoint (Ox_cons2), lower than the first oxygen content setpoint (Ox_cons1), when the mass (M) of the soot particles (M) in the particulate filter (13) is below or equal to the third threshold value (M2), a calculation module (35) of the second control module (34) calculates a third oxygen content setpoint (Ox_cons3) higher than the second oxygen content setpoint (Ox_cons2), is activated, **characterized in that** the third oxygen content setpoint (Ox_cons3) is a linear function of the reduction in the mass (M) of soot particles remaining in the particulate filter (13).

5. Control system according to Claim 4, in which the first module (33) comprises a comparator able to compare the actual temperature (T_{av_FAP}) measured upstream of the particulate filter (13) against a first temperature setpoint (T_cons1) for the temperature upstream of the particulate filter (13), if, during the first phase (P1) of the regeneration, the actual temperature (T_{av_FAP}) measured upstream of the particulate filter (13) is below the first temperature setpoint (T_cons1), the oxygen content regulating module (31) is activated in order to alternate oxygen-rich phases with oxygen-lean phases in order to obtain an actual oxygen content equal to a first oxygen content setpoint (Ox_cons1).

6. Control system according to Claim 5 or 4, in which the second control module (34) comprises a second comparator capable of comparing the mass (M) of the soot particles in the particulate filter (13) against a fourth threshold value (M3), if the mass (M) of soot particles in the particulate filter (13) is below or equal to said fourth threshold value (M3), a third control module (36) controlling a third phase (P3) of the regeneration is activated and activates the oxygen content regulating module (31) so as to alternate the oxygen-rich phases with the oxygen-lean phases in order to obtain an actual oxygen content equal to the first oxygen content setpoint (Ox_cons1).
